# EUROPÄISCHE PATENTSCHRIFT

(11) **EP 0 532 113 B1**
(45) Veröffentlichungstag und Bekanntmachung des Hinweises auf die Patenterteilung: **17.12.1997**
(21) Anmeldenummer: 92202733.9
(22) Anmeldetag: 09.09.1992
(51) Int. Cl.: C04B 35/00

(54) **Verfahren zur Herstellung von Formkörpern aus Keramik oder Glas**
Process for the preparation of shaped ceramic or glass bodies
Procédé pour la préparation des corpes moulées en céramique ou verre

(30) Priorität: 13.09.1991 DE 4130440
(43) Veröffentlichungstag der Anmeldung: 17.03.1993
(73) Patentinhaber: Philips Patentverwaltung GmbH, 22335 Hamburg (DE); Philips Electronics N.V., 5621 BA Eindhoven (NL)
(72) Erfinder: Optitz, Joachim, Dr., c/o Philips Patent. GmbH, W-2000 Hamburg 1 (DE); Romanowski, Gerd, Dr., c/o Philips Patent. GmbH, W-2000 Hamburg 1 (DE)
(74) Vertreter: Volmer, Georg, Dipl.-Ing.

(56) Entgegenhaltungen:
- WO-A-88/07505
- WO-A-89/07583
- US-A- 5 028 362
- US-A- 5 082 607

## Beschreibung

Die Erfindung betrifft ein Verfahren zur Herstellung von Formkörpern aus Keramik oder Glas, bei dem aus dem Ausgangsmaterial für den Formkörper in Form einer Suspension, die hochdisperse Feststoffteilchen, Wasser als Dispergiermittel und im Dispergiermittel lösliches organisches Bindemittel enthält, wobei der Suspension ein oder mehrere Monomere als Bindemittel und ein Polymerisationsinitiator zugesetzt werden, ein poröser Grünkörper geformt und anschließend getrocknet und gesintert wird.

Es ist bei der Herstellung von Formkörpern aus Glas oder Keramik bekannt, Glaspulver oder keramische Pulver in einer Flüssigkeit zu dispergieren und mit einem in der Flüssigkeit löslichen organischen Polymer, dem Bindemittel, zu mischen. Die verwendeten Dispergierflüssigkeiten sind entweder organische Flüssigkeiten oder Wasser. Ein derartiges Verfahren zur Herstellung keramischer Formkörper ist z.B. aus US-PS 4 641 221 bekannt.

Die Suspensionen werden entsprechend ihrer Konsistenz einem geeigneten Formgebungsverfahren unterzogen und getrocknet. Dabei entsteht ein poröser Grünkörper.

Die Grünkörper werden in einem Ofen erhitzt, wobei das organische Bindemittel durch Pyrolyse zersetzt wird und die flüchtigen Zerfallsprodukte durch das offene Porensystem des Formkörpers entweichen können. Anschließend wird die Temperatur soweit gesteigert, daß die Pulverteilchen durch Sintern zu einem kompakten Körper verdichten.

Nachteilig bei diesem Verfahren ist die Verwendung polmerer Bindemittel bei der Herstellung der Suspensionen, da diese Bindemittel auch bei geringen Konzentrationen (einige Prozent) zu einer starken Viskositätserhöhung führen und dadurch die Dispergierung der Pulverteilchen wesentlich erschweren. Aus diesem Grund wird üblicherweise das Pulver in einem ersten Arbeitsschritt in einer flüssigen Phase ohne Bindemittel dispergiert und anschließend das organische, polymere Bindemittel in Form einer Lösung zur Suspension hinzugefügt.

Damit können zwar die durch die Viskositätserhöhung bedingten Schwierigkeiten bei der Dispergierung umgangen werden, es wird aber nach dem Zufügen der Bindemittellösung ebenfalls eine Suspension mit stark erhöhter Viskosität erhalten. Gewöhnlich wird die Viskosität durch den für die mechanische Stabilität des porösen Formkörpers notwendigen Bindemittelzusatz um ein Mehrfaches der Viskosität der Suspension ohne Bindemittelzusatz erhöht.

Besonders bei Verwendung von wegen ihrer niedrigen Sintertemperatur und anderer Vorteile immer häufiger eingesetzten sehr feinteiligen Pulverteilchen mit mittleren Teilchendurchmessern von < 1 µm macht sich diese Viskositätserhöhung sehr nachteilig bemerkbar. Die hohe Oberflächenenergie dieser feinteiligen, kolloidalen Teilchen führt zu einer starken Wechselwirkung zwischen den dispergierten Pulverteilchen und den gelösten Bindemittelmolekülen, so daß oftmals der Feststoffgehalt der Suspension wesentlich reduziert werden muß, um diese feinteiligen Pulver überhaupt verarbeiten zu können.

Die hohe Viskosität der bindemittelhaltigen Suspensionen ist von Nachteil, da Inhomogenitäten nicht genügend schnell ausgeglichen werden und beim Formgebungsprozeß in den Formkörper eingebaut werden. Typische Inhomogenitäten in Formkörpern sind z.B. Poren, die durch eingeschlossene Luftblasen entstehen oder Spannungen und die daraus resultierenden Risse, die durch ungleichmäßige Verteilung der Pulverteilchen in der Suspension infolge von Agglomeraten entstehen. Auch beim Füllen von Formen mit stark viskosen Suspensionen können unterschiedliche Strömungsgeschwindigkeiten zu Entmischungen führen, oder es kann im Bereich von kleinen Strömungsgeschwindigkeiten zu einem vorzeitigen Verfestigen der Suspension kommen, da die Fließgrenze von hochgefüllten, bindemittelhaltigen Suspensionen gewöhnlich sehr groß ist.

Des weiteren wird der Flüssigkeitsanteil der Suspensionen durch den Zusatz von Bindemittellösungen erhöht und damit die Feststoffkonzentration erniedrigt, so daß beim Trocknen größere Flüssigkeitsmengen verdampft werden müssen und eine relativ große Trockenschwindung beherrscht werden muß. Durch die Schwindung können Spannungen im Formkörper auftreten, die eventuell zu Rissen oder Deformationen führen. Deshalb ist man bestrebt, die Trockenschwindung so klein wie möglich zu halten, was durch den Zusatz von Bindemittellösungen aber gerade nicht erreicht wird.

Bei der häufig praktizierten Verwendung von organischen Flüssigkeiten anstatt von Wasser als flüssige Phase (Dispergiermittel) ist zusätzlich von Nachteil, daß die verwendeten Geräte und Räumlichkeiten wegen der Brennbarkeit bzw. Explosionsgefahr von Dampf-Luftgemischen besonderen Sicherheitsanforderungen genügen müssen.

Des weiteren ist wegen Umweltschutzvorschriften die Entsorgung der organischen Flüssigkeiten und ihrer Dämpfe zu beachten, was mit erheblichen Kosten verbunden ist.

Ein aus Am.Cer.Soc.Bull. 66 (1987), Nr. 10, Seiten 1513 bis 1516 bekanntes Verfahren vermeidet die geschilderten Nachteile der hohen Viskosität infolge Verwendung organischer polymerer Bindemittel dadurch, daß die Pulverteilchen in einer niedrig viskosen Flüssigkeit, die überwiegend ein organisches Monomer, das sowohl als Bindemittel als auch als Dispergiermittel wirkt, sowie Dispergierhilfsmittel und gegebenenfalls weiteres flüchtiges, nicht polymerisierbares Dispergiermittel enthält, dispergiert werden. Diese Suspensionen werden mit geringen Mengen eines Polymerisationsinitiators gemischt, in Formen gefüllt und unter geeigneten Bedingungen zur Polymerisation gebracht. Dabei verfestigt sich die dünnflüssige Suspension und die dispergierten Pulverteilchen werden in eine Kunststoffmatrix eingebettet.

Der nach diesem bekannten Verfahren erhaltene Formkörper hat aber zwei grundsätzliche Nachteile: Der wichtigste Nachteil ist, daS nur Grünkörper erhalten werden, die nicht porös sind. Die Feststoffpartikel sind quasi in eine geschlossene Kunststoffmatrix eingebettet. Es fehlen offene Poren, durch die bei der Pyrolyse des Bindemittels die flüchtigen Bestandteile aus dem Formkörper entweichen können, so daß das Bindemittel sehr langsam ausgeheizt werden muß, damit der Druck der Zersetzungsgase den Formkörper nicht zerreißt. Zum anderen ist der Bindemittelanteil in der Suspension sehr viel größer als bei der Herstellung von Suspensionen mit Polymeren als Bindemittel, denn bei dem aus Am.Cer.Soc.Bull. (a.a.O.) bekannten Verfahren wird das Monomer sowohl als Dispergiermittel als auch als Bindemittel gebraucht und muß daher in einer solchen Menge eingesetzt werden, daß ausreichend flüssige Phase für die Dispergierung der Feststoffpartikel zur Verfügung steht. Wird dagegen ein Polymer als Bindemittel eingesetzt, ist noch weitere flüssige Phase (z.B. Wasser) am Aufbau der Suspension beteiligt, so daß der Polymeranteil relativ gering ist. Bei einem hohen Bindemittelanteil dauert das Ausheizen des Bindemittels naturgemäß relativ lange. Bei einem hohen Bindemittelgehalt ist in der Regel auch die Grünkörperdichte relativ gering, was zu einer großen Brennschwindung führt, wodurch die Gefahr der Riß-bildung erhöht wird. Des weiteren sind bei Grünkörpern mit geringen Dichten und deshalb großen geometrischen Abmessungen entsprechend große Sinteröfen erforderlich, die nur unter hohen Kosten oder aus technischen Gründen gar nicht beschafft werden können.

Weiterhin ist aus der US 5,028,362 ein Verfahren zum Formen von keramischen Pulvern zur Bildung von festen Formkörpern bekannt, bei dem (a) ein Schlicker hergestellt wird, der keramisches Pulver, ein Dispergiermittel für das Pulver und eine Monomerenlösung mit mindestens einem wasserlöslichen monofunktionellen Monomeren und wenigstens ein wasserlösliches bifuktionelles Monomeres, wobei die funktionellen Gruppen der monofunktionellen und bifunktionellen Monomeren ausgewählt werden aus Vinyl- oder Allylgrupppen, weiterhin einen Radikalpolymerisationsinitiator und ein wässriges Lösungsmittel enthält, (b) der Schlicker in eine Form überführt wird und (c) die Form mit dem Schlicker auf eine Temperatur und für eine Zeit erhitzt wird, die ausreicht, um die Monomeren zu polymerisieren und zu verknüpfen, um eine Matrix aus einem festen Polymer-Lösungsmittel-Gel zuschaffen. Dabei kann das monofunktionelle Monomere Acrylamid, das bifunktionelle Monomer N,N'-methylenbisacdylamid, der Radikalpolymerisationsinitiator ein Persulfat und das Dispergiermittel ein Acryl- oder Methacrylsäuresalz sein.

Bei diesem Verfahren wird das Lösungsmittel in dem Gel gebunden und die Trocknung findet nur an der Oberfläche der Formkörper statt, sodaß die Formkörper an der Trocknungsfront leicht reißen.

Der Erfindung liegt die Aufgabe zugrunde, ein Verfahren der eingangs genannten Art so zu verbessern, daß ihm die geschilderten Nachteile bei der Herstellung von keramischen oder Glas-Formkörpern nicht anhaften.

Diese Aufgabe wird erfindungsgemäß dadurch gelöst, daß als Bindemittel a) wasserlösliche Acrylsäureester oder Methacrylsäureester mit funktionellen Gruppen wie Aminen, Hydroxiden, Ethern, ionogenen Gruppen oder Kombinationen dieser Gruppen oder b) Kombinationen solcher Acrylsäureester oder Methacrylsäureester mit wasserlöslichen Derivaten monomerer Vinylverbindungen, wie Salze, Amide, Ester mit funktionellen Gruppen wie Amine, Hydroxide, Ether, ionogene Gruppen oder Kombinationen dieser Gruppen und/oder mit vernetzenden di- oder mehrfunktionellen Vinylmonomeren eingesetzt werden.

Dadurch, daß als Bindemittel wasserlösliche Acrylsäureester oder Methacrylsäureester eingesetzt werden, ergibt sich der besondere Vorteil, daß poröse Grünkörper hergestellt werden können, denn die Feststoffpartikel sind über den Bindemittelanteil nur örtlich miteinander vernetzt. Es ergibt sich also im verformten Grünkörper die gleiche homogene Verteilung der Feststoffpartikel, wie sie in der Suspension vorlag.

Dadurch, daß Wasser statt einer, wie aus Am.Cer.Soc.Bull. (a.a.O.) bekannt, organischen flüchtigen Flüssigkeit als Dispergiermittel eingesetzt wird, ergibt sich der weitere Vorteil, daß keine speziellen Sicherheitsvorkehrungen wie bei der Verwendung von etwa brennbaren Lösungsmitteln als Dispergiermittel getroffen zu werden brauchen.

Vorteilhafte weitere Ausgestaltungen des erfindungsgemäßen Verfahrens ergeben sich aus den Unteransprüchen.

Das Bindemittel wird vorzugsweise in einer Konzentration im Bereich von etwa 2 bis 30 Gew.%, bezogen auf den Feststoffanteil in der Suspension, eingesetzt.

Die zur Herstellung nach dem erfindungsgemäßen Verfahren geeigneten Pulver aus dem Bereich der Glaspulver und der keramischen Pulver haben vorzugsweise einen mittleren Teilchendurchmesser von d < 1 µm. Diese technisch immer mehr an Bedeutung gewinnenden kolloidalen Pulver haben eine hohe Sinteraktivität mit gegenüber grobteiligem Pulver deutlich erniedrigter Sintertemperatur und lassen sich besonders stabil bei gleichzeitig hohem Füllgrad und niedriger Viskosität in Wasser unter Verwendung kommerzieller Dispergierhilfsmittel suspendieren. Bei den bekannten Verfahren mit Verwendung von polymeren Bindemitteln in den Suspensionen ist dagegen nur eine deutlich kleinere Feststoffkonzentration zu erreichen.

Als Beispiele für die Feststoffpulver sind Quarzglaspulver mit einem mittleren Teilchendurchmesser von d = 40 nm und einer spezifischen Oberfläche von 50 m²/g, Aluminiumoxid-pulver eines mittleren Teilchendurchmessers von d = 20 nm und einer spezifischen Oberfläche von 100 m²/g, BaTiO₃ eines mittleren Teilchendurchmessers von d = 200 nm und einer spezifischen Oberfläche von 8 m2/g oder ZrO₂ eines mittleren Teilchendurchmessers von d = 170 nm zu nennen. Es lassen sich selbstverständlich auch Pulver mit mittleren Teilchendurchmessern > 1 µm nach dem erfindungsgemäßen Verfahren verarbeiten; die obere Grenze der Teilchendurch-messer wird durch die Bedingung festgelegt, daß die dispergierten Teilchen nach der Formgebung bis zur Trocknung nicht sedimentieren dürfen.

Die oben beispielsweise genannten Pulver können nach allen bekannten Verfahren dispergiert werden, z.B. in Kugelmühlen, Perlmühlen, durch Ultraschall, wobei gegebenenfalls Dispergierhilfsmittel, wie z.B. Pyrophosphat, zugegeben werden können oder Säuren bzw. Laugen, um den pH-Wert der Suspension anzupassen, damit die kolloidale Stabilität derdispergierten Pulver gewährleistet bleibt. Es hat sich gezeigt, daß besonders bei Pulvern mit submikroskopischen Teilchen eine Dispergierung unter Einwirkung von Ultraschall vorteilhaft ist.

Die Feststoffkonzentration kann bis zu 55 Vol.% der Suspension betragen; der zu erreichende Grenzwert ist spezifisch für das eingesetzte Pulver und wird durch den Anstieg der Viskosität bei steigender Feststoffkonzentration bestimmt. Es werden aber bei allen Pulvern deutlich höhere Feststoffkonzentrationen als bei Einsatz polymerer Bindemittel erreicht, wenn nach dem Verfahren der vorliegenden Erfindung gearbeitet wird.

Die Suspensionen werden mit einem oder mehreren in der wässerigen Phase löslichen Monomeren gemischt, falls nicht bei der Dispergierung des Pulvers das Monomer schon in der wässerigen Phase gelöst war.

Die für das erfindungsgemäße Verfahren geeigneten Monomere müssen wasserlöslich sein und durch radikalische, thermische oder photochemische Initiierung polymerisieren. Des weiteren müssen bei der Polymerisation der Monomere wasserlösliche Polymere oder Hydrogele gebildet werden, damit die homogene Verteilung der Pulverteilchen in der Suspension durch die Viskositätserhöhung oder Gelierung bei der Polymerisation beibehalten wird und bei der anschließenden Trocknung zu einem homogenen, fehlerfreien Formkörper verfestigt.
Es wurde gefunden, daß hierfür geeignet sind die wasserlöslichen Esterderivate der Acrylsäure bzw. Methacrylsäure mit funktionellen Gruppen wie Amine, Hydroxide, Ether, ionogene Gruppen oder Kombinationen dieser funktionellen Gruppen.

Außerdem sind vernetzende di- oder mehrfunktionelle Vinyl-monomere, wie z.B. N,N-Methylen-bis-methacrylamid im Gemisch mit den erfindungsgemäßen Esterdrivaten oder Polyethylenglykol-di-methacrylat gut zur Herstellung von Suspensionen nach dem erfindungsgemäßen Verfahren geeignet. Die Monomere werden einzeln oder als Gemisch in Konzentrationen von etwa 2 bis 30 Gew.% vom eingesetzten Pulver verwendet.

Die niedrig viskosen Suspensionen werden zur Entfernung von grobteiligen Pulverteilchen filtriert oder zentrifugiert und anschließend in Vakuum entgast (Entfernen von eingeschlossenen Luftblasen). Diese Verfahrensschritte lassen sich wegen der niedrigen Viskosität der nach dem erfindungsgemäßen Verfahren hergestellten Suspensionen sehr schnell durchführen. Eine besonders vorteilhafte Ausführung des erfindungsgemäßen Verfahrens unterstützt den Vakuumentgasungsprozeß durch Ultraschall. Dabei werden die Suspensionen in wenigen Minuten entgast, während dieser Arbeitsschritt bei Suspensionen mit polymeren Bindemitteln oftmals Stunden dauert oder gar nicht durchzuführen ist, da sich eine durch das gelöste Bindemittel stabilisierte Schaumphase ausbildet.

Eine Form aus Kunststoff, Glas oder Metall, die gegebenenfalls mit einem handelsüblichen Trennmittel zu beschichten ist, wird mit der Suspension gefüllt. Zur Durchführung des Polymerisationsprozesses wird der gelöste Polymerisationsinitiator unter geeigneten Reaktionsbedingungen aktiviert. Dies kann entweder durch energiereiche Strahlung, Licht (UV bzw. IR) oder auch durch Temperaturerhöhung oder durch elektrochemische Reaktionen erfolgen. Die Temperatur darf den Siedepunkt der wässerigen Phase selbstverständlich nicht überschreiten. Möglicherweise muß die Polymerisation unter Schutzgas ausgeführt werden, was von dem eingesetzten Monomer und der Initiierungsreaktion abhängt.

Bei Verwendung von wasserlöslichen Acrylsäureestern als Bindemittel und Peroxodisulfat als Polymerisationsinitiator sind typische Polymerisationsbedingungen: eine Temperatur im Bereich von 40 bis 80 °C über eine Dauer von etwa 0,5 bis 2 Stunden. Es wird hierbei ein Formkörper gebildet, der entweder in der geöffneten Form oder nach Entnahme aus der Form getrocknet wird.

Ein besonderer Vorteil des erfindungsgemäßen Verfahrens liegt in der Möglichkeit, während der Polymerisation der Monomere Additive wie z.B. Weichmacher, Antihaftmittel, Antischaummittel u.ä. über reaktive Molekülteile in die wachsende Polymerkette einzubauen. Dadurch ergeben sich intern modifizierte Binder, die die Additivfunktionen aufgrund der chemischen Konstitution stabil und gleichmäßig in der Suspension verteilen. Bei diesen intern modifizierten Bindemitteln kann es nicht zu den bekannten, nachteiligen Erscheinungen einer Entmischung, Verdampfung oder zu lokalen Konzentrationsgradienten der Additive kommen.

Beim Trocknen des polymerisierten Formkörpers in einer geöffneten Form, was z.B. vorteilhaft ist bei der Herstellung flacher Substrate (Scheiben), verdunstet das Wasser über die freiliegende Oberfläche. Der Formkörper schwindet dabei nur in der Höhe, nicht jedoch in der Fläche. Bei der Verwendung von Formmaterialien, an denen die polymerisierten Formkörper nur schwach haften, findet auch eine geringe Schwindung in lateraler Richtung statt.

Die Trocknung der Formkörper wird unter definierten Bedingungen (Temperatur, Luftströmung, Feuchtigkeitsgehalt der Luft) durchgeführt. Dadurch wird das Auftreten von Feuchtigkeitsgradienten, die zu Spannungen und Rissen im Grünkörper führen, vermieden.

Bei Temperaturen um 50 °C liegt die Trocknungszeit typischer Weise bei etwa 500 g Wasser pro Stunde und m² Oberfläche für Feststoffkonzentrationen von 20 bis 40 Vol.% im Formkörper.

Die nach dem erfindungsgemäßen Verfahren hergestellten Grünkörper sind sehr homogen aufgebaut. Die Proben enthalten keine Agglomerate, Blasen oder Makroporen und der mittlere Porendurchmesser beträgt bei Suspensionen mit submikroskopischen Pulvern etwa 50 bis 100 nm.

Die spezifische Oberfläche der Proben ist durch die homogene Verteilung des durch Polymerisation gebildeten Bindemittels geringer als bei den Ausgangspulvern, da die einzelnen Teilchen mit einer Bindemittelschicht überzogen sind. Das freie Porenvolumen wird dementsprechend mit zunehmender Monomerkonzentration geringer. Typische Werte für Grünkörper mit einem Gewichtsverhältnis von Feststoff: Monomer von 9:1 sind ein Porenvolumen von 0,6 cm³/g und eine um etwa 30 % reduzierte spezifische Oberfläche.

Die Dichte der Grünkörper wird hauptsächlich durch die Feststoffkonzentration in der Suspension und das Monomer/Feststoff-Verhältnis beeinflußt und beträgt etwa 30 bis 50 % der Pulverdichte.

Mit dem Verfahren gemäß der vorliegenden Erfindung sind insbesondere folgende Vorteile verbunden:
Monomerhaltige Suspensionen, bei denen das(die) Monomer(e) in Lösungsmittel (Wasser) gelöst ist(sind), sind sehr viel homogener und niedrig-viskoser als Suspensionen mit dem gleichen Anteil an polymerem Bindemittel;
ein weiterer Vorteil derartiger Suspensionen ist die Tatsache, daß Dispergiermittel und zu polymerisierendes Bindemittel nicht identisch sind; erst dies erlaubt die Herstellung offenporiger Grünkörper;
es ist möglich, hochgefüllte Suspensionen unter Anwendung submikroskopischer Pulverteilchen herzustellen;
die Dispergierung submikroskopischer Pulverteilchen kann besonders effizient unter Einwirkung von Ultraschall erfolgen;
unter Ultraschalleinkopplung können nach dem erfindungsgemäßen Verfahren hergestellte Suspensionen im Vakuum besonders effizient entgast werden;
die im Dispergiermittel (Wasser) gelösten Monomermoleküle können unter Zusatz eines wasserlöslichen Polymerisationsinitiators polymerisiert werden, wobei die Polymerisation der monomerhaltigen Suspensionen durch energiereiche Strahlung, Licht (UV, IR), Temperaturerhöhung oder elektrochemische Reaktionen ausgelöst werden kann;
als Polymerisationsinitiator sind alle wasserlöslichen Radikalbildner wie z.B. H₂O₂, Peroxodisulfate oder Azoverbindungen geeignet;
die Polymerisationsinitiatoren werden im Konzentrationsbereich von etwa 0,05 bis 1 Mol%, bezogen auf die Monomerkonzentration, verwendet;
bei wasserlöslichen Acrylsäureestern und Ammoniumperoxodisulfat als Polymerisationsinitiator polymerisieren die Monomere bei einer Temperatur im Bereich von 40 bis 80 °C in einer Zeit von etwa 0,5 bis 2 Stunden;
bei der Polymerisation der Monomere können Additive mit reaktiven Gruppen in die wachsenden Polymermoleküle eingebaut werden.

Im folgenden werden Ausführungsbeispiele der Erfindung beschrieben und in ihrer Wirkungsweise erläutert.

### 1. Herstellung eines zylindrischen SiO₂-Grünkörpers.

In einem Ultraschallbad wird SiO₂-Pulver einer spezifischen Oberfläche von 40 m²/g in einer Menge von 300 g in 659 g destilliertes Wasser eingerührt und über eine Stunde unter fortgesetztem Rühren dispergiert. Die dünnflüssige SiO₂-Suspension wird zur Entfernung von Verunreinigungen oder Agglomeraten über ein Sieb mit einer Maschenweite von 15 µm abgesiebt und im Vakuum unter Ultraschalleinkopplung entgast. Anschließend werden unter Ausschluß von Luftsauerstoff 40,9 g Hydroxyethylacrylat sowie 7,5 ml einer 2%igen Ammoniumperoxodisulfat-Lösung in der Suspension gelöst.

Ein Rohr, z.B. aus Polytetrafluorethylen, wird mit der monomerhaltigen Suspension gefüllt, beidseitig verschlossen und über eine Dauer von 95 min auf eine Temperatur von 60 °C erhitzt. Unter diesen Bedingungen polymeri-siert das Monomer, und es bildet sich ein fester Formkörper. Dieser Formkörper wird aus der Form entnommen und bei einer Temperatur von 40 °C an Luft getrocknet. Während des Trocknens schwindet der Formkörper isotrop (lineare Schwindungsrate: 24 %). Die spezifische Oberfläche des rißfreien Grünkörpers beträgt 23 m²/g (die spezifische Oberfläche des Ausgangs-SiO₂-Pulvers beträgt 40 m²/g), das Porenvolumen des erhaltenen Grünkörpers beträgt 0,65 cm³/g und der mittlere Porenradius liegt bei 47 nm bei einer Porenverteilung in einem relativ schmalen Bereich ohne Makroporen. Die Dichte des Grünkörpers wurde zu 0,9 g/cm³ bestimmt.

### 2. Herstellung eines planaren Bariumtitanat-Substrats.

In einem Ultraschallbad werden unter kräftigem Rühren 296 g einer Suspension, bestehend aus 69 % eines feinteiligen BaTiO₃-Pulvers einer spezifischen Oberfläche von 8 m²/g in destilliertem Wasser unter Zusatz von 1% eines kommerziellen Dispergierhilfsmittels, wie z.B. ein Ammoniumpolyacrylat mit einem Polymerisationsgrad von etwa 60, hergestellt. Die Suspension wird 1 Stunde unter fortgesetztem Rühren dispergiert. Die dünnflüssige Suspension wird zur Entfernung von Verunreinigungen oder Agglomeraten über ein Sieb mit einer Maschenweite von 15 µm abgesiebt. Anschließend werden 10,9 g einer Monomermischung aus 92,5 % Hydroxyethylacrylat, 7,0 % Acrylamid und 0,5 % Polyethylenglykol-di-methacrylat sowie 1,9 ml einer 2%igen Ammoniumperoxodisulfat-Lösung in der Suspension gelöst.

Die monomerhaltige Suspension wird im Vakuum unter Ultraschalleinkopplung über eine Dauer von 3 min entgast und unter Ausschluß von Luftsauerstoff in eine runde Kunststoffschale mit flachem Boden eingefüllt. Das Verhältnis von Durchmesser zu Höhe dieser Form beträgt 8:1.

Die geschlossene Form wird für eine Dauer von 75 min auf eine Temperatur von 65 °C erhitzt. Unter diesen Bedingungen polymerisiert das Monomergemisch, und es bildet sich ein fester Formkörper. Die Abdeckung der Schale wird entfernt und durch ein feinmaschiges Gazegewebe ersetzt. Anschließend wird der Formkörper auf eine Temperatur von 40 °C erwärmt. Die durch das Gazegewebe verdampfende Feuchtigkeit wird durch einen über die Form geführten laminaren, trockenen Luftstrom abtransportiert.

Während des Trocknens schwindet der Grünkörper hauptsächlich vertikal. Die Volumenschwindungsrate beträgt 53 %. Der rißfreie Grünkörper hat eine Dichte von 3,2 g/cm³.

## Patentansprüche

1. Verfahren zur Herstellung von Formkörpern aus Keramik oder Glas, bei dem als Ausgangsmaterial für den Formkörper eine Suspension hergestellt wird, die hochdisperse Feststoffteilchen, Wasser als Dispergiermittel und im Dispergiermittel lösliches organisches Bindemittel enthält, wobei der Suspension ein oder mehrere Monomer(e) als Bindemittel und ein Polymerisationsinitiator zugesetzt werden und als Bindemittel a) wasserlösliche Acrylsäureester oder Methacrylsäureester mit funktionellen Gruppen wie Aminen, Hydroxiden, Ethern, ionogenen Gruppen oder Kombinationen dieser Gruppen oder b) Kombinationen solcher Acrylsäurestern oder Methacrylsäureester mit wasserlöslichen Derivaten monomerer Vinylverbindungen, wie Salze, Amide, Ester mit funktionellen Gruppen wie Amine, Hydroxide, Ether, ionogene Gruppen oder Kombinationen dieser Gruppen und/oder mit vernetzenden di- oder mehrfunktionellen Vinylmonomeren eingesetzt werden und aus der Suspension ein poröser Grünkörper geformt und anschließend getrocknet und gesintert wird.

2. Verfahren nach Anspruch 1,
**dadurch gekennzeichnet**, daß das Bindemittel in einer Konzentration im Bereich von etwa 2 bis 30 Gew.%, bezogen auf den Feststoffanteil in der Suspension, eingesetzt wird.

3. Verfahren nach den Ansprüchen 1 bis 2,
**dadurch gekennzeichnet**, daß wasserlösliche Polymerisationsinitiatoren eingesetzt werden.

4. Verfahren nach Anspruch 3,
**dadurch gekennzeichnet**, daß als Polymerisationsinitatoren H₂O₂, Peroxodisulfate oder Azoverbindungen eingesetzt werden.

5. Verfahren nach Anspruch 4,
**dadurch gekennzeichnet**, daß die Polymerisationsinitiatoren in einer Konzentration im Bereich von 0,05 bis 1 Mol%, bezogen auf die Monomerkonzentration in der Suspension, eingesetzt werden.

6. Verfahren nach den Ansprüchen 1 bis 5,
**dadurch gekennzeichnet**, daß als Feststoff Glas- oder keramische Pulver eines mittleren Teilchendurchmessers von d < 1 µm eingesetzt werden.

## Claims

1. A method of manufacturing shaped articles from ceramics or glass, in which method a suspension is prepared which is used as the starting material for the moulded body, which suspension contains highly disperse solid particles, water as the dispersing agent and an organic binder which can be dissolved in the dispersing agent, wherein one or more monomers as the binder and a polymerization initiator are added to the suspension, and for the binder use is made of a) water-soluble acrylates or methacrylates having functional groups, such as amines, hydroxides, ethers, ionogenic groups or combinations of these groups or b) combinations of such acrylates or methacrylates with water-soluble derivatives of monomeric vinyl compounds, such as salts, amides, esters having functional groups such as amines, hydroxides, ether, ionogenic groups or combinations of these groups, and/or with cross-linking di-or multifunctional vinyl monomers, and a porous green body being made from the suspension, which green body is subsequently dried and sintered.

2. A method as claimed in Claim 1, characterized in that the binder is used in a concentration in the range from 2 to 30% by weight of the solids content in the suspension.

3. A method as claimed in Claim 1 to 2, characterized in that water-soluble polymerization initiators are used.

4. A method as claimed in Claim 3, characterized in that H₂O₂, peroxodisulphates or azo compounds are used as the polymerization initiators.

5. A method as claimed in Claim 4, characterized in that the polymerization initiators are used in a concentration in the range from 0.05 mol.% to 1 mol.% of the monomer concentration in the suspension.

6. A method as claimed in Claims 1 to 5, characterized in that glass powder or ceramic powder having an average particle diameter d < 1 µm is used as the solid.

## Revendications

1. Procédé de fabrication de corps moulés en céramique ou en verre, une suspension qui contient des particules de matières solides très dispersées, de l'eau comme agent dispersant et un liant organique soluble dans l'agent dispersant étant utilisée comme matière première pour le corps moulé, un ou plusieurs monomères étant ajoutés comme liant ainsi qu'un amorceur de polymérisation à la suspension et les liants utilisés étant a) des esters hydrosolubles d'acide acrylique et méthacrylique avec des radicaux fonctionnels tels que des amines, des hydroxydes, des éthers, des radicaux ionogènes ou des combinaisons de ces radicaux ou b) des combinaisons de tels esters d'acide acrylique ou méthacrylique avec des dérivés hydrosolubles de composés vinyliques monomériques tels que des sels, des amides, des esters avec des radicaux fonctionnels tels que des amines, des hydroxydes, des éthers, des radicaux ionogènes ou des combinaisons de ces radicaux et/ou avec des monomères vinyliques difonctionnels ou polyfonctionnels réticulants et un corps vert poreux étant moulé à partir de la suspension et ensuite séché et fritté.

2. Procédé selon la revendication 1, caractérisé en ce que le liant est utilisé dans une concentration de l'ordre d'environ 2 à 30% en poids par rapport au pourcentage de matières solides dans la suspension.

3. Procédé selon l'une des revendications 1 à 2, caractérisé en ce que des amorceurs de polymérisation hydrosolubles sont mis en oeuvre.

4. Procédé selon la revendication 3, caractérisé en ce que de l'H₂O₂, du peroxodisulfate ou des composés azoïques sont utilisés comme amorceurs de polymérisation.

5. Procédé selon la revendication 4, caractérisé en ce que les amorceurs de polymérisation sont utilisés dans une concentration de l'ordre de 0,05 à 1% molaire par rapport à la concentration en monomères dans la suspension.

6. Procédé selon l'une des revendications 1 à 5, caractérisé en ce que des poudres de verte ou de céramique d'un diamètre moyen des particules de d < 1 µm sont utilisées comme matière solide.
